# EUROPEAN PATENT APPLICATION

(11) **EP 4 693 742 A1**
(43) Date of publication of application: **11.02.2026**
(21) Application number: 24781370.2
(22) Date of filing: 28.03.2024
(51) Int. Cl.: H01Q 3/32, H01Q 13/10, H01Q 1/42, F16H 19/04, F16B 2/02

(54) **PHASE SHIFTER FOR ANTENNA DEVICE**

(30) Priority: 29.03.2023 KR 20230041580; 27.03.2024 KR 20240041596
(71) Applicant: KMW Inc., Hwaseong-si, Gyeonggi-do 18462 (KR)
(72) Inventor: KIM, Duk Yong, Yongin-si Gyeonggi-do 17086 (KR); MOON, Young Chan, Suwon-si Gyeonggi-do 16692 (KR); SO, Sung Hwan, Hwaseong-si Gyeonggi-do 18477 (KR); CHOI, Oh Seog, Hwaseong-si Gyeonggi-do 18430 (KR); SEO, Yong Won, Hwaseong-si Gyeonggi-do 18442 (KR); SON, Seung Han, Yongin-si Gyeonggi-do 17111 (KR); KANG, Seong Man, Hwaseong-si Gyeonggi-do 18430 (KR); YANG, Hyoung Seok, Hwaseong-si Gyeonggi-do 18377 (KR); SHIN, Dong Hee, Incheon 21393 (KR)
(74) Representative: impuls legal PartG mbB
(86) International application number: PCT/KR2024/095640
(87) International publication number: WO 2024/205382

(57) **Abstract**

The present disclosure relates to a phase shifter for antenna apparatuses. Particularly, the phase shifter includes a dielectric panel for phase adjustment (hereinafter referred to as "phase dielectric") movably disposed at a branch point of a transmission line disposed to be spaced apart from one surface of a reflecting panel, a dielectric panel for impedance matching (hereinafter referred to as "impedance dielectric") fixedly disposed parallel to one side of the phase dielectric, and a moving clamp configured to move the phase dielectric. The phase dielectric has an impedance matching step stepped such that an air layer is formed on a surface facing the reflecting panel, thereby providing an advantage of preventing the exterior of the transmission line from being complicated.

## Description

### [Technical Field]

The present disclosure relates to a phase shifter for antenna apparatuses, and more particularly, to a phase shifter for antenna apparatuses which is configured to shift a phase value through a change in dielectric constant by a dielectric, without changing a physical length of a transmission line provided for feeding radiating elements.

### [Background Art]

Generally, in a wireless communication network such as a mobile communication network or a wireless local loop (WLL), a base station is installed between

n an exchange and a subscriber terminal, and wireless signals are exchanged between the base station and the subscriber terminal.

An antenna apparatus installed in the base station is designed to have a predetermined vertical/horizontal beam pattern and beam directivity characteristic in consideration of a spatial distribution of subscribers.

Recently, existing mobile communication operators have been acquiring business rights in frequency bands other than frequency bands already allocated to the mobile communication operators and diversifying services, and in response to demands due to such changes in radio wave environments, beam characteristics such as a beam width and a beam tilt of an antenna (radiating element) are required to be varied.

In other words, in the case where a beam width of a communication antenna or a broadcasting antenna is fixed, when steering or tilting the beam, a person has to climb a tower and manually control the antenna, which causes a problem. Therefore, recently, a structure configured to cope with beam characteristic variations such as beam steering and beam tilting through shifting a phase value by a change in a physical length of a transmission line provided for radiating elements has been employed.

However, to change the physical length of the transmission line, a phase shifter needs to be provided. A relatively large space occupied by the phase shifter hinders slimming of a product, and complexity of the transmission line leads to a problem of cost increase in a manufacturing process.

### [DISCLOSURE]

### [Technical Problem]

The present disclosure has been made in an effort to solve the above-mentioned technical problem, and an object of the present disclosure is to provide a phase shifter for antenna apparatuses, which is configured such that transmission lines provided in an air strip line form are disposed to be spaced apart from a front surface and a rear surface of a reflecting panel, and a phase value shift is enabled through a change in dielectric constant at a branch point.

Furthermore, another object of the present disclosure is to provide a phase shifter for antenna apparatuses, in which a phase dielectric is disposed between the transmission lines that are spaced apart from the reflecting panel and are disposed in an air strip line form, thereby being advantageous in forming an impedance matching step for impedance matching.

Technical objects of the present disclosure are not limited to the aforementioned objects, and the other objects not described above may be evidently understood from the following description by those skilled in the art.

### [Technical Solution]

A phase shifter for antenna apparatuses according to an embodiment of the present disclosure may include a dielectric panel for phase adjustment (hereinafter referred to as "phase dielectric") movably disposed at a branch point of a transmission line disposed to be spaced apart from one surface of a reflecting panel, a dielectric panel for impedance matching (hereinafter referred to as "impedance dielectric") fixedly disposed parallel to one side of the phase dielectric, a moving clamp configured to move the phase dielectric. The phase dielectric may have an impedance matching step stepped such that an air layer is formed on a surface facing the reflecting panel.

Here, the phase dielectric may be disposed between one surface of the reflecting panel and the transmission line in an air strip line form disposed to be spaced apart from the one surface of the reflecting panel.

Furthermore, in the case where the transmission line has the branch point at which the transmission line is branched into a plurality of branch lines to feed a plurality of radiating elements from an input line, the phase dielectric may be formed to extend along the branch lines.

In addition, the phase shifter may be configured to shift respective phase values of the radiating elements according to a variation in dielectric constant depending on a change in position of the phase dielectric.

In addition, the impedance dielectric may be disposed to extend in a longitudinal direction between the input line and one surface of the reflecting panel at the branch points. The impedance matching step may be formed within a longitudinal range of the impedance dielectric.

Moreover, the phase shifter may further include a driving motor configured to be electrically driven and generate a rotational force, and a plurality of vertical moving bars configured to receive the rotational force generated from the driving motor and move in an up and down direction on one surface of the reflecting panel. The moving clamp may be coupled to each of a plurality of positions of the plurality of vertical moving bars and configured to move the phase dielectric in the up and down direction.

Furthermore, a pinion gear may be axially rotatably connected to a rotating shaft of the driving motor. The plurality of vertical moving bars may move in a vertical direction by an operation in which rack gear teeth of a rack gear provided in a connection bar connecting the plurality of vertical moving bars engage with pinion gear teeth of the pinion gear.

Furthermore, the moving clamp may include a clamp body secured to the vertical moving bar via a bridge bar extending perpendicularly from the vertical moving bar, a coupling dielectric coupled to a rear surface of the clamp body and configured to mediate coupling of the phase dielectric to the clamp body with the transmission line interposed therebetween, and an elastic element provided in the clamp body and configured to elastically support the transmission line toward the phase dielectric.

In addition, the transmission line may include a first transmission line disposed on a front surface of the reflecting panel and configured to feed a first radiating element associated with a radiating beam in a first frequency band, and a second transmission line disposed on a rear surface of the reflecting panel and configured to feed a second radiating element associated with a radiating beam in a second frequency band. The phase shifter may be provided with the driving motor, the plurality of vertical moving bars, and the moving clamp separately so as to be associated respectively with the first transmission line and the second transmission line.

Furthermore, in the case where a plurality of radiating elements are arranged to be spaced apart in the up and down direction at an end of each of the branch lines, and each of the radiating elements is disposed such that a spacing distance between adjacent radiating elements is the same, the impedance matching step of the phase dielectric may be formed to implement an identical phase difference between phase values formed by the plurality of radiating elements.

Moreover, in the case where the branch point is defined such that an upper end of the input line is referred to as a first branch point, and respective ends of an upper transmission line and a lower transmission line branched from the first branch point, each being further branched into three branch transmission lines, are respectively referred to as a second branch point and a third branch point, the phase dielectric may be positioned to vary a dielectric constant at each of the branch points.

In addition, the phase dielectric may be disposed corresponding to the first branch point, the second branch point, and the third branch point.

Furthermore, in the case where target phase values of the radiating elements are set to a maximum value of +2.5X and a minimum value of -2.5X, the impedance matching step of the phase dielectric disposed at the first branch point may be machined to provide phase differences of +1.5X and -1.5X with respect to the upper transmission line and the lower transmission line, respectively, so that respective phase differences between the radiating elements are identical.

Furthermore, in the case where target phase values of the radiating elements are set to a maximum value of +2.5X and a minimum value of -2.5X, the impedance matching step of the phase dielectric disposed at each of the second branch point and the third branch point may be machined such that, except for a middle branch transmission line among the three branch transmission lines, a phase difference of +1X is provided with respect to an upper branch transmission line and a phase difference of -1X is provided with respect to a lower branch transmission line, so that respective phase differences between the radiating elements are identical.

### [Advantageous Effects]

According to a phase shifter for antenna apparatuses in accordance with an embodiment of the present disclosure, a phase value shift is enabled according to a change in an effective dielectric constant of a dielectric without a need for changing a physical length of transmission line provided in an air strip line form. Accordingly, not only can slimming of a product be achieved, but an effect of cost reduction in a manufacturing process of the product can also be obtained.

In addition, according to the present disclosure, because a phase dielectric is disposed between the transmission lines that are spaced apart from a reflecting panel and are disposed in an air strip line form, formation of an impedance matching step for impedance matching is facilitated, thereby providing an effect of improving manufacturability of a product.

### [Description of Drawings]

FIG. 1 is a perspective view illustrating an external shape of an antenna apparatus in which a phase shifter is installed according to an embodiment of the present disclosure.
FIGS. 2a and 2b are respectively front and rear exploded perspective views illustrating the configuration of FIG. 1 from which an antenna housing is separated.
FIG. 3 is a perspective view illustrating an external shape of the configuration in (a) of FIG. 1 from which a radome panel is removed.
FIG. 4 is a perspective view illustrating an external shape of the configuration in (b) of FIG. 1 from which a rear panel is removed.
FIG. 5 is a perspective view illustrating an antenna board assembly on which the phase shifter is installed according to an embodiment of the present disclosure.
FIG. 6 is an exploded perspective view illustrating the configuration of FIG. 5 from which low-band elements and mid-band elements are separated.
FIG. 7 is an exploded perspective view illustrating the configuration of FIG. 5 from which only the low-band elements are separated.
FIG. 8 is an exploded perspective view illustrating overlapping installation of the low-band elements and the mid-band elements in the configuration of FIG. 5.
FIGS. 9a and 9b are exploded perspective views illustrating a front surface and a rear surface of a reflecting panel, on which the low-band elements and the mid-band elements are installed, in the configuration of FIG. 5.
FIGS. 10a and 10b are respectively front and rear perspective views illustrating a low-band phase shifter and a mid-band phase shifter installed on the reflecting panel.
FIGS. 11a and 11b are respectively exploded perspective views of FIGS. 10a and 10b, and enlarged views of portions thereof.
FIGS. 12a and 12b 1are a front view and a rear view of FIGS. 10a and 10b, respectively.
FIG. 13 is a cutaway perspective view illustrating a dielectric panel for phase adjustment among components of the phase shifter for antenna apparatuses according to an embodiment of the present disclosure, and an enlarged view of a portion thereof.
FIG. 14 is a partially enlarged perspective view for explaining an operation of the phase shifter for antenna apparatuses according to an embodiment of the present disclosure.
FIG. 15 is a sectional view taken along line B-B of FIG. 14.
FIG. 16 is a schematic view for explaining a function of the dielectric panel for phase adjustment among the components of the phase shifter for antenna apparatuses according to an embodiment of the present disclosure.
FIG. 17 illustrates a partial front view (a) of a first transmission line for explaining phase difference implementation according to position and depth adjustment of an impedance matching step of the phase dielectric among the components of the phase shifter for antenna apparatuses according to an embodiment of the present disclosure, and a graph (b) illustrating an ideal phase difference.

### <Description of Reference Numerals>

1: antenna apparatus 5: antenna housing
10: rear panel 20: side panel
30: radome panel 40: cap panel
50: reinforcing frame 100: antenna board assembly
110: reflecting panel 120,130: radiating element(s)
120: low-band element 130: mid-band element
200: first transmission line 210L,210R: input line
220U: upper transmission line 220D: lower transmission line
300: second transmission line 400A,400B: phase shifter
410: driving motor 411: pinion gear teeth
420: rack gear 421: rack gear teeth
430: vertical moving bar 440: moving clamp
450: dielectric panel for phase adjustment 455: impedance matching step
460: dielectric panel for impedance matching

### [Best Mode]

Hereinafter, a phase shifter for antenna apparatuses according to an embodiment of the present disclosure will be described in detail with reference to the attached drawings.

It should be noted that in assigning reference numerals of each drawing, like reference numerals refer to like elements as much as possible even though like elements are shown in different drawings. Furthermore, in the following description of embodiments of the present disclosure, detailed descriptions of related known configurations or functions will be omitted when it is determined that the detailed descriptions would obscure the understanding of the embodiments of the present disclosure.

The terms first, second, A, B, (a), and (b) may be used to describe elements of the embodiments of the present disclosure. These terms are used only for the purpose of discriminating one constituent element from another constituent element, and the nature, the sequences, or the orders of the constituent elements are not limited by the terms. Furthermore, unless otherwise defined, all terms used herein, including technical or scientific terms, have the same meaning as commonly understood by those skilled in the art to which the present disclosure pertains. The terms such as those defined in commonly used dictionaries should be interpreted as having meanings consistent with meanings in the context of related technologies and should not be interpreted as ideal or excessively formal meanings unless explicitly defined in the present application.

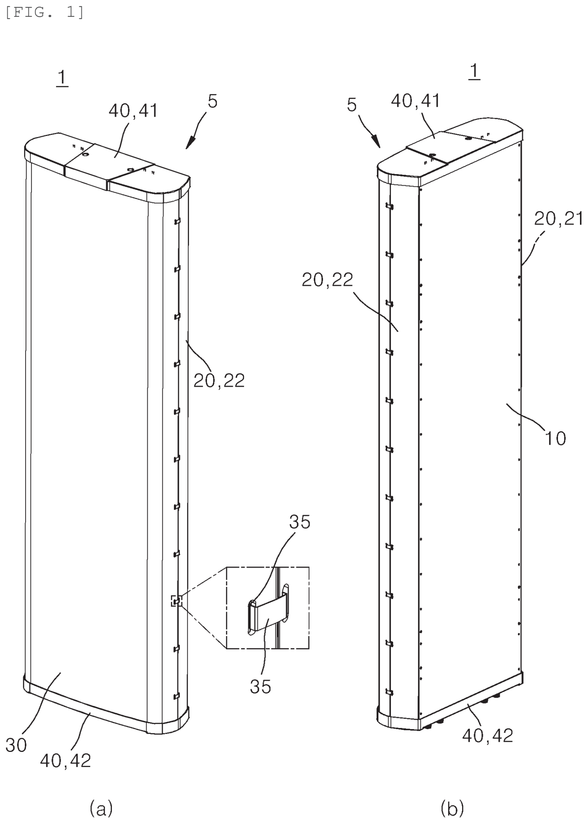

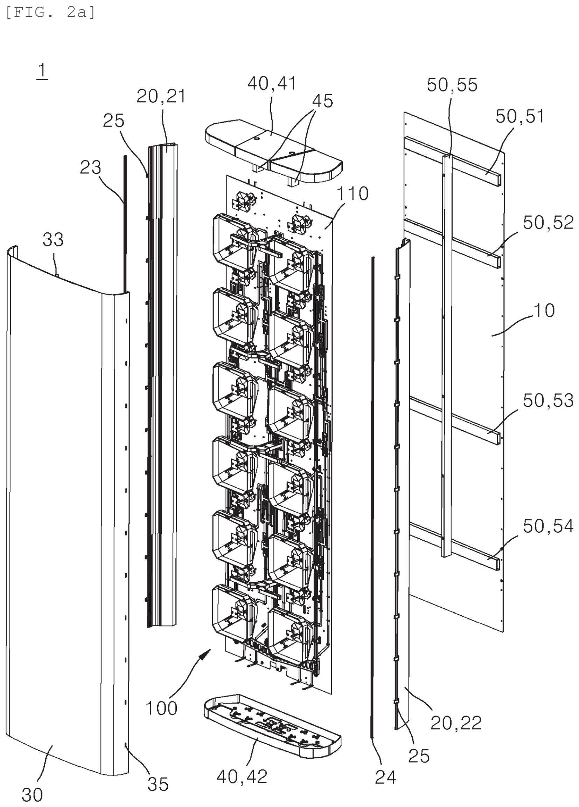

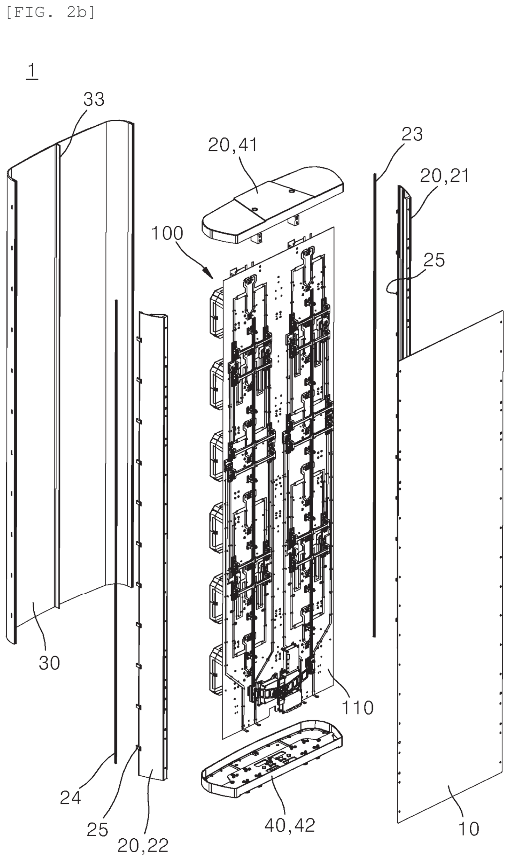

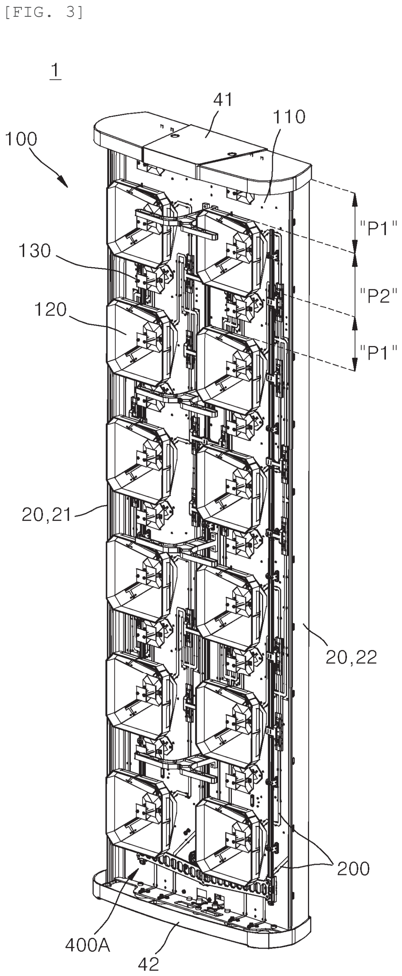

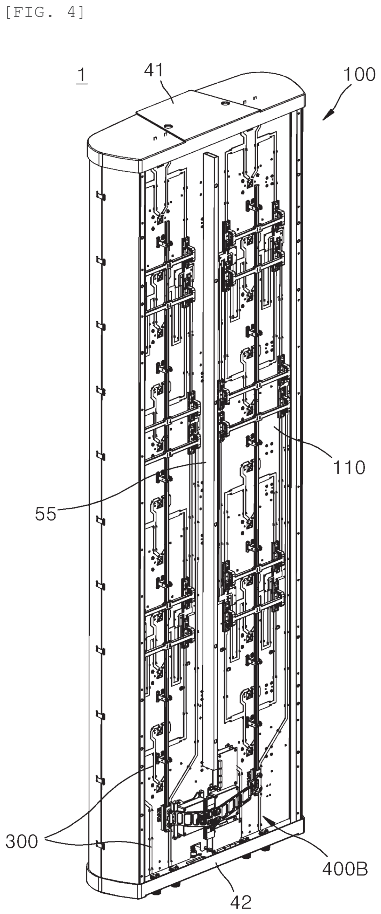

FIG. 1 is a perspective view illustrating an external shape of an antenna apparatus in which a phase shifter is installed according to an embodiment of the present disclosure. FIGS. 2a and 2b are respectively front and rear exploded perspective views illustrating the configuration of FIG. 1 from which an antenna housing is separated. FIG. 3 is a perspective view illustrating an external shape of the configuration in (a) of FIG. 1 from which a radome panel is removed. FIG. 4 is a perspective view illustrating an external shape of the configuration in (b) of FIG. 1 from which a rear panel is removed.

An antenna apparatus 1 provided with phase shifters 400A and 400B according to an embodiment of the present disclosure includes an antenna housing 5 having an internal space (reference numeral not shown), and an antenna board assembly 100 disposed vertically in an up and down direction in the internal space of the antenna housing 5.

As referred to in FIGS. 1, 2a, and 2b, the antenna housing 5 includes a rear panel 10 that functions as a structural frame, side panels 20 provided with a left body panel 21 and a right body panel 22, which are coupled to left and right ends of the rear panel 10 and form a thickness in a forward and backward direction, a radome panel 30 coupled to front ends of the side panels 20 to shield an internal space, and cap panels 40 provided with an upper cap panel 41 configured to cover an open portion at an upper side, and a lower cap panel 42 configured to cover an open portion at a lower side.

The rear panel 10, which forms an external shape of a rear surface of the antenna housing 5, may be provided in a thin panel form. Here, the rear panel 10 may be formed of an aluminum material, but is not necessarily limited thereto, and does not exclude a non-metallic material such as a plastic resin material.

On a front surface (i.e., an internal space side) of the rear panel 10, a reinforcing frame 50 may be installed to reinforce rigidity of the rear panel 10 provided in a thin panel form. The reinforcing frame 50 may include a plurality of left-right reinforcing bars 51 to 54 coupled horizontally in a left and right direction on the front surface of the rear panel 10 and spaced apart from each other in the up and down direction by a predetermined distance, and a center reinforcing bar 55 that is coupled vertically in the up and down direction to plurality of left-right reinforcing bars 51 to 54 and connects intermediate portions of the plurality of left-right reinforcing bars 51 to 54.

Respective rear ends of the left body panel 21 and the right body panel 22 may be coupled to the left end and the right end of the rear panel 10 to form side surfaces of the antenna housing 5. Respective front ends of the left body panel 21 and the right body panel 22 may be coupled to the radome panel 30 by using a plurality of coupling clips 25 provided for coupling with the radome panel 30. Left and right ends of the radome panel 30 may be bent rearward with a predetermined curvature, and clip grooves 35 may be formed at positions corresponding to the plurality of coupling clips 25 to enable latching engagement of the coupling clips 25.

A left sealer 23 and a right sealer 24 may be respectively interposed between the left body panel 21 and the left end of the radome panel 30, and between the right body panel 22 and the right end of the radome panel 30, thereby preventing external water (rainwater, etc.) from entering the internal space.

However, although not illustrated in the drawings, it is apparent that components identical to the above-described left sealer and right sealer may also be interposed between the left body panel 21 and the left end of the rear panel 10, and between the right body panel 22 and the right end of the rear panel 10.

The upper cap panel 41 of the cap panels 40 may be more firmly coupled to upper ends of the rear panel 10, the left body panel 21, the right body panel 22, and the radome panel 30 through a pair of coupling mediation blocks 45 that mediate coupling to an upper end of a reflecting panel 110 of components of the antenna board assembly 100 to be described later.

In addition, the lower cap panel 42 of the cap panels 40 may be formed with a plurality of through-holes or connection terminals (not shown) for connection of an external feeding cable (not shown). The lower cap panel 42 may also be collectively coupled to lower ends of the rear panel 10, the left body panel 21, the right body panel 22, and the radome panel 30.

The radome panel 30 may protect an internal configuration of the antenna board assembly 100 provided in the internal space from outside, and may be formed of a radio wave transmissive material that allows radiation from radiating elements 120 and 130 provided with low-band elements 120 and mid-band elements 130, which are described later, to be smoothly performed.

As referred to in FIGS. 3 and 4, the antenna board assembly 100 may be disposed in the internal space of the antenna housing 5.

More specifically, as referred to in FIGS. 3 and 4, in the internal space of the antenna housing 5, the plurality of radiating elements 120 and 130 may be arranged at a front side of the reflecting panel 110 so as to form a plurality of rows and columns in the up and down direction and in the left and right direction. A transmission line 300 in an air strip line form for feeding radiating elements related to one frequency band (for example, the mid-band elements 130 in the present embodiment) among the plurality of radiating elements 120 and 130 may be disposed at a rear side of the reflecting panel 110.

For reference, in an embodiment of the present disclosure, a structure is employed in which the plurality of radiating elements 120 and 130 are arranged to form six columns in the up and down direction and two rows in the left and right direction. That is, a structure is employed in which, in the up and down (column) direction, mid-band elements 130 are disposed between the respective low-band elements 120 to be described later, and a single mid-band element 130 is disposed at a central portion of each of the low-band elements 120.

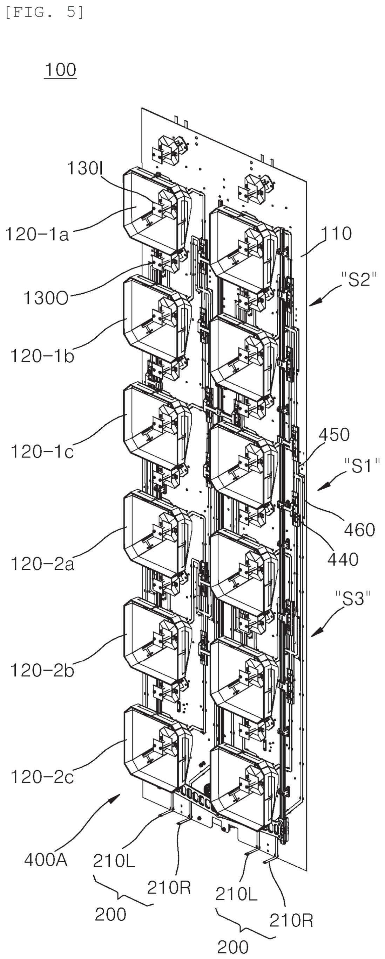

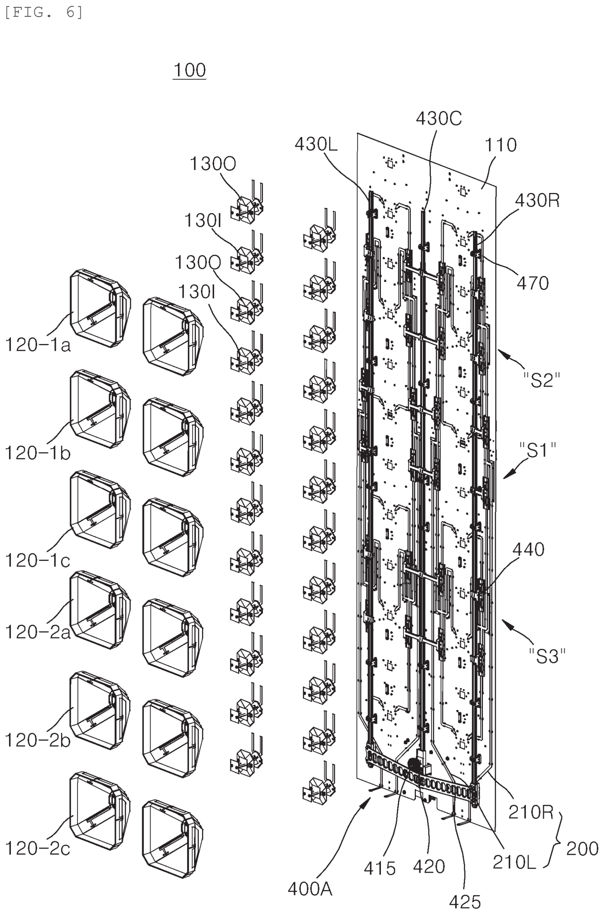

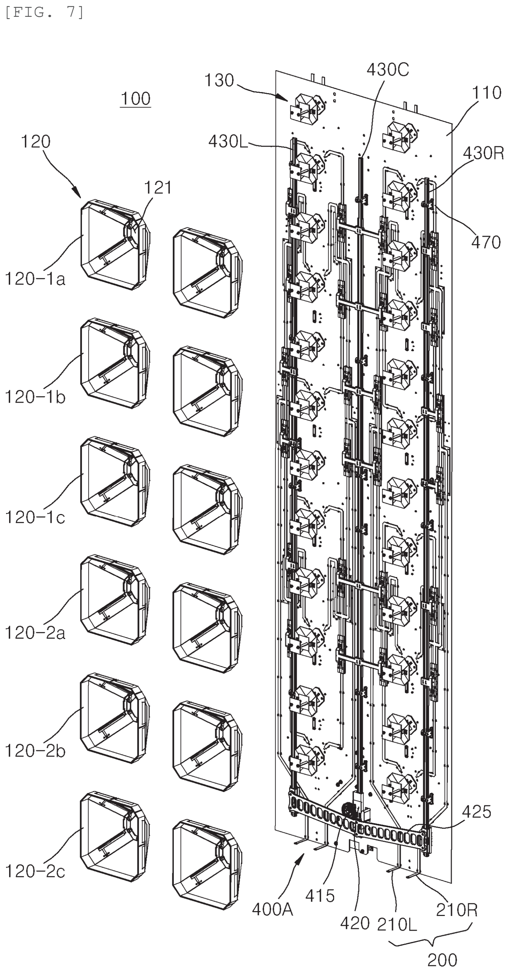

FIG. 5 is a perspective view illustrating an antenna board assembly on which the phase shifter is installed according to an embodiment of the present disclosure. FIG. 6 is an exploded perspective view illustrating the configuration of FIG. 5 from which low-band elements and mid-band elements are separated. FIG. 7 is an exploded perspective view illustrating the configuration of FIG. 5 from which only the low-band elements are separated.

In the antenna apparatus 1 according to an embodiment of the present disclosure, the antenna board assembly 100 may include radiating elements 120 and 130 disposed on the front side of the reflecting panel 110, as referred to in FIGS. 5 to 7. Here, the reflecting panel 110 may be formed of a material that performs a role of reflecting a frequency beam radiated from the radiating elements 120 and 130 at the front side forward.

The radiating elements 120 and 130 are communication components that perform a role of radiating a beam in a predetermined frequency band when fed from a low-band transmission line 200 and a mid-band transmission line 300 to be described later.

Here, the predetermined frequency band may be limited to a single fixed frequency band, but in an embodiment of the present disclosure, description is limited to the case where a first frequency band, which is a relatively low frequency band, and a second frequency band, which is a relatively high frequency band, are applied.

Therefore, the radiating elements 120 and 130 may include the low-band elements 120 capable of radiating a beam in the first frequency band, and the mid-band elements 130 capable of radiating a beam in the second frequency band.

As such, in the case where the radiating elements 120 and 130 are provided to radiate beams of different frequency bands, it is preferable that the radiating elements 120 and 130 are disposed at positions where mutual interference between the radiated beams does not occur.

However, in terms of securing isolation, it is most preferable that a horizontal interval between adjacent radiating elements 120 and 130 is maintained at a distance of at least 1/2 of a wavelength relative to the frequency, and in order to avoid interference therebetween, spacing apart all of the radiating elements 120 and 130 for each frequency band may cause a problem that an overall size of the product is increased.

Accordingly, the antenna apparatus 1 according to an embodiment of the present disclosure may be designed such that the mid-band elements 130, which are relatively small in size, are disposed in portions overlapping in the forward and backward direction with the low-band elements 120, which are relatively large in size, so that each frequency band may smoothly radiate a pattern beam while preventing enlargement of the overall size of the product.

More specifically, as referred to in FIG. 3, the low-band elements 120 may be disposed on a front surface of the reflecting panel 110 to be spaced apart from each other by a predetermined distance in the up and down direction, and the mid-band elements 130 may be alternately disposed in regions P1 provided without beam interference with the low-band elements 120 and in regions P2 provided with beam interference with the low-band elements 120. Hereinafter, the mid-band elements 130 disposed in the regions P1 provided without beam interference are referred to as outer mid-band elements 1300, and the mid-band elements 130 disposed in the regions P2 provided with beam interference are referred to as inner mid-band elements 130I.

The inner mid-band elements 130I disposed in the regions P2 with the beam interference may be provided to be exposed forward through element installation holes 121 respectively formed at centers of the low-band elements 120.

As referred to in FIGS. 5 to 7, a total of six low-band elements 120 (120-1a to -1c and 120-2a to -2c) may be disposed to be spaced apart from each other by a predetermined distance in the vertical direction (hereinafter referred to as "V-direction"), thereby constructing at least one RF channel.

Here, the mid-band elements 130 may be disposed in a total of twelve in the V-direction, in that the inner mid-band elements 130I are provided in the element installation holes 121 of the respective low-band elements 120, and one outer mid-band element 1300 is further provided in a region P1 without beam interference that is further provided outside each of the respective low-band elements 120.

The low-band elements 120 and the mid-band elements 130 may be arranged in two in the horizontal direction (hereinafter referred to as "H-direction").

The low-band elements 120 and the mid-band elements 130 may be fed through the transmission lines 200 and 300, which are independently disposed, so that beams corresponding to respective frequency bands may be radiated, and the respective elements 120 and 130 arranged in the V-direction may radiate beams with unique phase values to form a specific pattern beam (beamforming).

The transmission lines 200 and 300 may be intensively disposed on either a front surface or a rear surface of the reflecting panel 110. However, in the antenna apparatus 1 according to an embodiment of the present disclosure, phase shifters 400A and 400B described below are separately provided as a low-band phase shifter 400A and a mid-band phase shifter 400B so as to independently shift phases of the radiation beams of the low-band elements 120 and the mid-band elements 130 of two frequency bands. To minimize operational interference between the respective phase shifters 400A and 400B, the transmission line 200 related to the low-band elements 120 is disposed on the front surface of the reflecting panel 110, and the transmission line 300 related to the mid-band elements 130 is disposed on the rear surface of the reflecting panel 110.

Hereinafter, among the transmission lines 200 and 300, a line disposed on the front surface of the reflecting panel 110 and performing a function of feeding the low-band elements 120 will be referred to as a "low-band transmission line," and reference numeral 200 will be assigned thereto, and a line disposed on the rear surface of the reflecting panel 110 and performing a function of feeding the mid-band elements 130 will be referred to as a "mid-band transmission line," and reference numeral 300 will be assigned thereto.

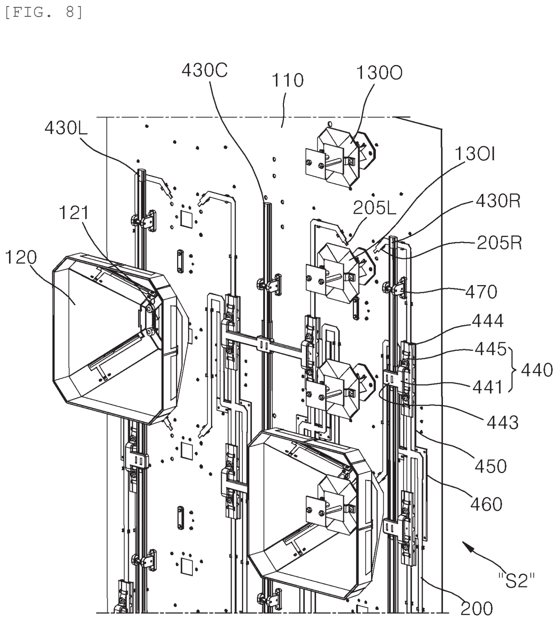

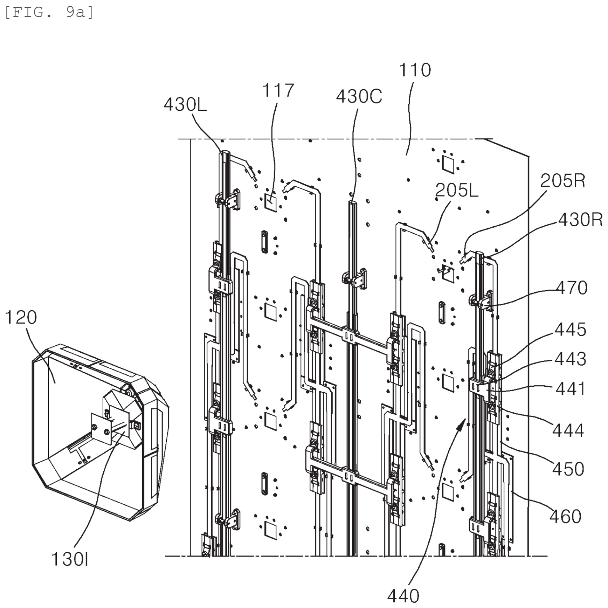

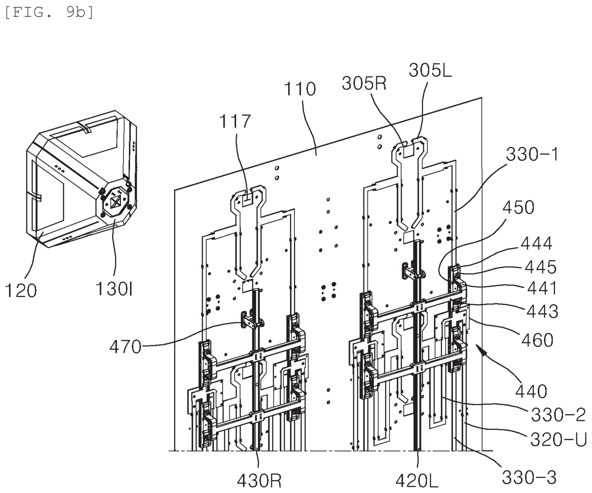

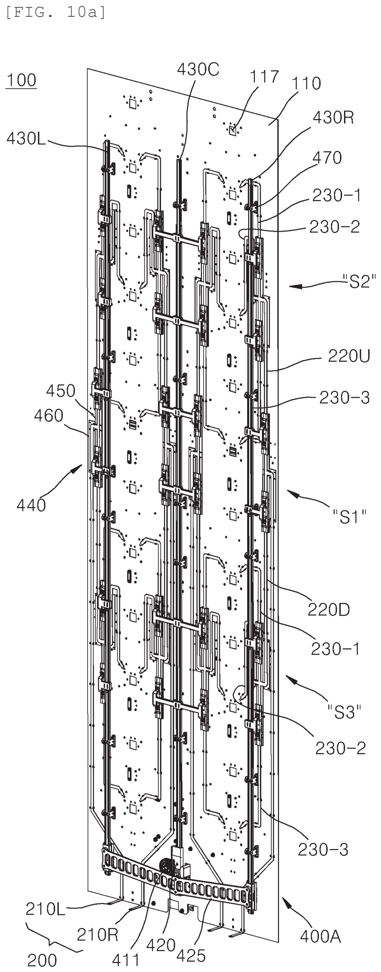

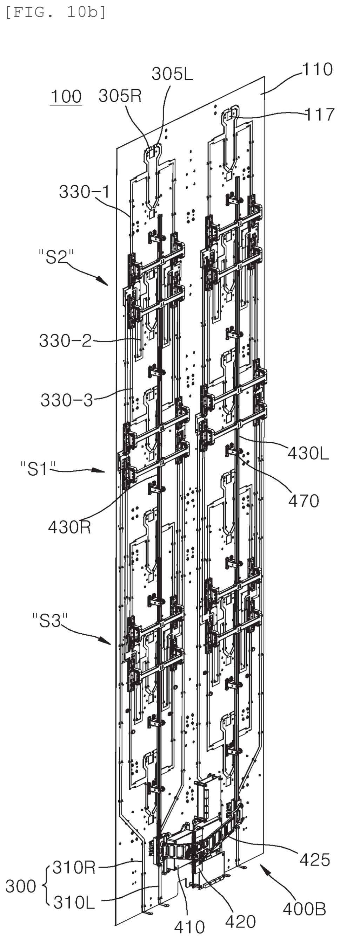

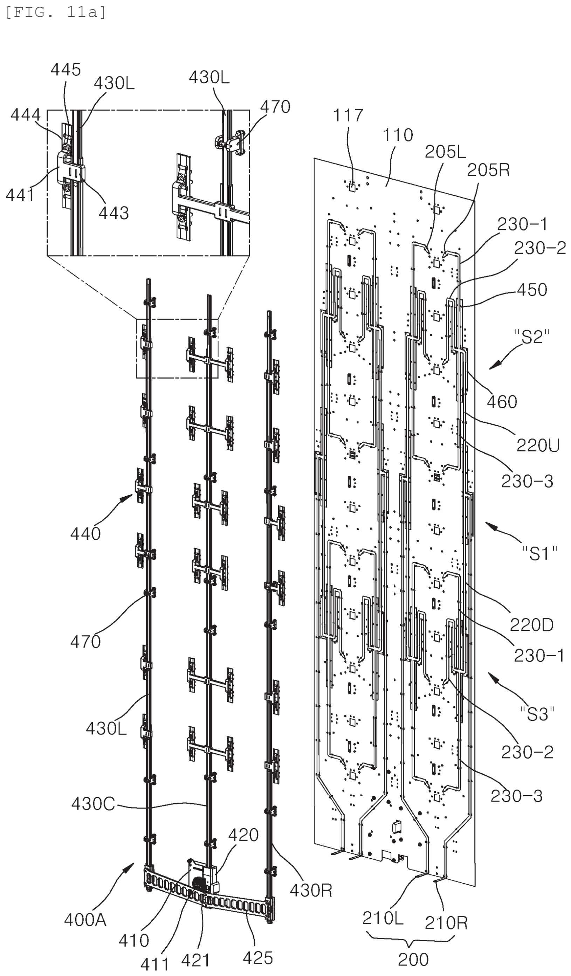

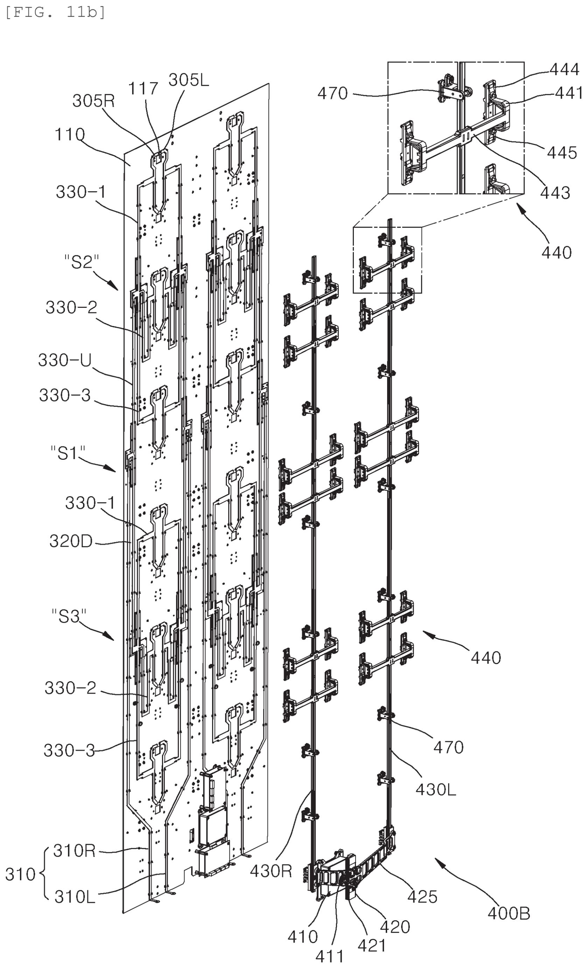

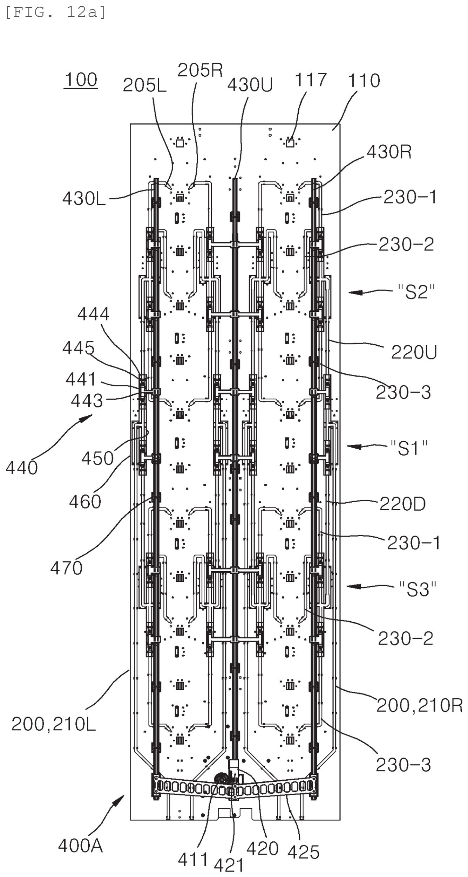

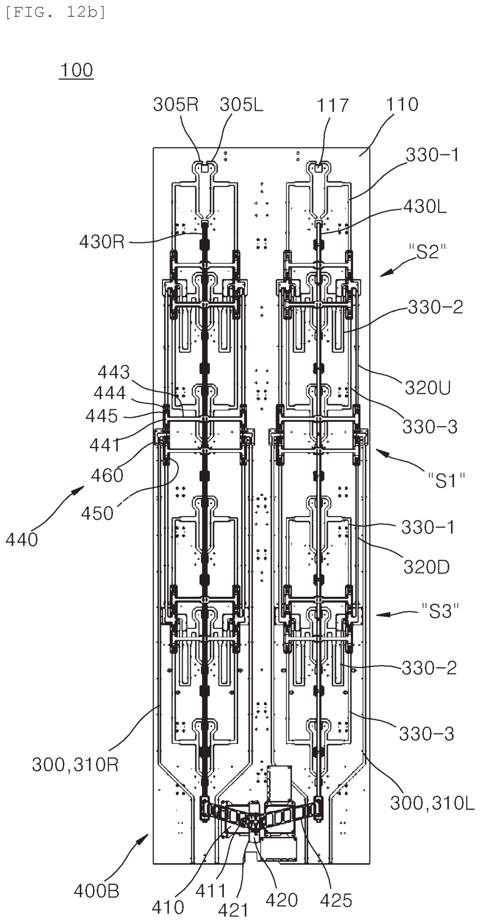

FIG. 8 is an exploded perspective view illustrating overlapping installation of the low-band elements and the mid-band elements in the configuration of FIG. 5. FIGS. 9a and 9b are exploded perspective views illustrating a front surface and a rear surface of a reflecting panel, on which the low-band elements and the mid-band elements are installed, in the configuration of FIG. 5. FIGS. 10a and 10b are respectively front and rear perspective views illustrating a low-band phase shifter and a mid-band phase shifter installed on the reflecting panel. FIGS. 11a and 11b are respectively exploded perspective views of FIGS. 10a and 10b, and enlarged views of portions thereof. FIGS. 12a and 12b are a front view and a rear view of FIGS. 10a and 10b, respectively.

The low-band elements 120 and the mid-band elements 130 may be dual-polarization elements configured to generate at least one polarized beam of dual polarization when fed at two positions through respective different transmission lines.

Here, as referred to in FIGS. 3 to 12B, the low-band transmission line 200 and the mid-band transmission line 300 may be disposed such that two input transmission lines 210L and 210R and two input transmission lines 310L and 310R are respectively disposed on the front surface and the rear surface of the reflecting panel 110 so as to feed, at two positions, each type of the low-band elements 120 and the mid-band elements 130 arranged in the V-direction.

First, with regard to the low-band transmission line 200, the left input line 210L and the right input line 210R may be linearly extended and disposed on the left portions and the right portions of the low-band elements 120, respectively, through the lower cap panel 42.

An upper end of each of the left input line 210L and the right input line 210R may be disposed in an intermediate portion of the low-band elements 120 arranged in the V-direction, and from the upper end (a first branch point S1), the corresponding line may be branched into branch lines including an upper transmission line 220U and a lower transmission line 220D, and extended.

At respective front ends (a second branch point S2 and a third branch point S3) of the upper transmission line 220U and the lower transmission line 220D, the upper transmission line 220U and the lower transmission line 220D may be respectively branched toward three upper low-band elements 120-1a to 120-1c positioned relatively above and three lower low-band elements 120-2a to 120-2c positioned relatively below, and each may extend to form branch lines, which are three branch transmission lines 230-1 to 230-3.

Hereinafter, an end of each of the three branch transmission lines 230-1 to 230-3 will be defined as a corresponding one of output ends 205L and 205R serving as feeding ends for feeding connection to one side and a remaining side of each low-band element 120.

Each of the output ends 205L and 205R may be connected to a feeding pattern formed on an outer surface or an inner surface of the low-band element 120 when the low-band element 120 is mounted, so that feeding can be achieved.

The mid-band transmission line 300 differs from the low-band transmission line 200 in that the mid-band transmission line 300 is disposed on the rear surface of the reflecting panel 110 and that each of three branch transmission lines 330-1 to 330-3 is further branched into two lines at an end thereof.

More specifically, in the mid-band transmission line 300, the left input line 310L and the right input line 310R may be linearly extended and disposed on the left portions and the right portions of the mid-band elements 130, respectively, through the lower cap panel 42.

Here as well, an upper end of each of the left input line 310L and the right input line 310R may be disposed in an intermediate portion of the mid-band elements 130 arranged in the V-direction, and from the upper end (a first branch point S1), the corresponding line may be branched into branch lines including an upper transmission line 320U and a lower transmission line 320D, and extended.

At respective front ends (a second branch point S2 and a third branch point S3) of the upper transmission line 320U and the lower transmission line 320D, the upper transmission line 320U and the lower transmission line 320D may be respectively branched toward six mid-band elements 130 positioned relatively above and six mid-band elements 130 positioned relatively below, and each may extend to form branch lines, which are three branch transmission lines 330-1 to 330-3.

At respective front ends of the three branch transmission lines 330-1 to 330-3, as a difference from the low-band transmission line 200 as described above, the lines may be further branched to form two branch lines, and ends thereof may function as the output ends 305L and 305R as described above.

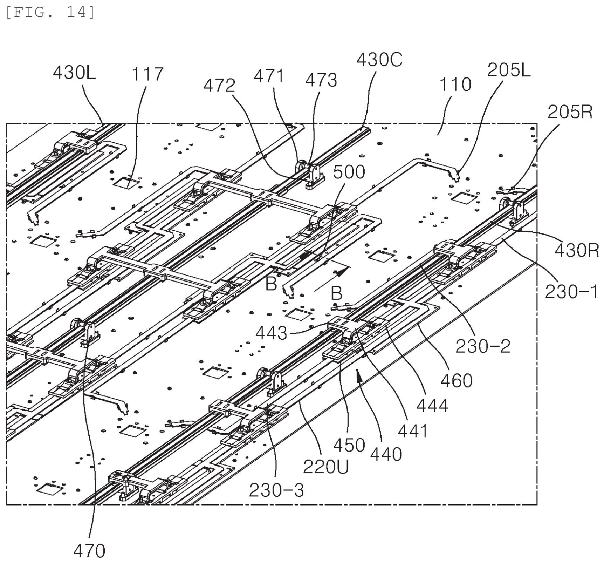

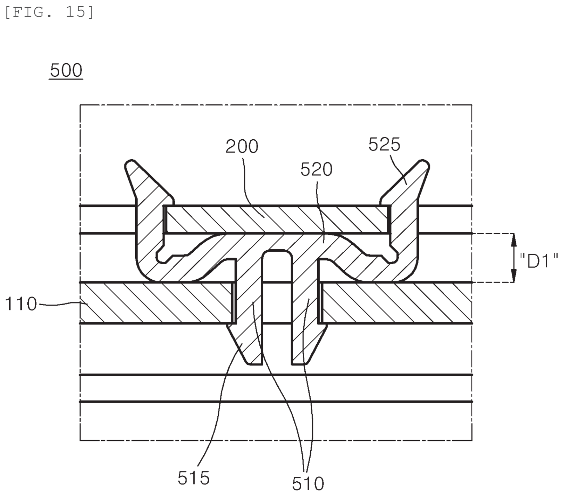

The transmission lines 200 and 300 as described above may be provided in the form of an air strip line disposed to be spaced apart by a predetermined distance from a front surface and a rear surface of the reflecting panel 110 through spacing support 500 (refer to FIGS. 14 and 15 to be described later).

Although feeding lines for the radiating elements 120 and 130 may preferably be formed by printing patterns on a surface of a general printed circuit board (PCB), the PCB has a problem in that signal loss is significant due to a dielectric constant of an FR-4 material itself. In order to solve the problem of such loss, a transmission line structure in an air strip form may be advantageous. However, when it is intended to implement a phase shifter in the transmission line structure in the air strip form, the structure is required to be used in combination with a plurality of cables and PCBs, thereby causing a problem of deteriorated appearance and increased weight. In such a structure, an impedance matching element is additionally applied, and it becomes difficult to alleviate loss due to an increase in discontinuous sections.

Therefore, the antenna apparatus 1 according to an embodiment of the present disclosure employs a transmission line structure in an air strip form so as to prevent signal loss due to the dielectric constant of the material of the PCB, and also employs phase shifters 400A and 400B configured to shift phase values through variation of the dielectric constant, so as to prevent deteriorated appearance and increased weight.

In particular, the antenna apparatus 1 according to an embodiment of the present disclosure proposes a technical feature in which the transmission lines 200 and 300 are manufactured in a form of general conductor strips, and disposed to be spaced apart by a predetermined distance from the front surface and the rear surface of the reflecting panel 110 using spacing supports 500, and a dielectric panel 450 for phase adjustment, which is a core component of each of the phase shifters 400A and 400B, may be inserted and disposed in each spacing space therebetween.

Describing this in more detail, as referred to in FIGS. 8 to 12B, the phase shifters 400A and 400B of the antenna apparatus 1 according to an embodiment of the present disclosure may include a low-band phase shifter 400A, which operates on the front side of the reflecting panel 110 to shift phase values of radiation beams of the low-band elements 120 and a mid-band phase shifter 400B, which operates on the rear side of the reflecting panel 110 to shift phase values of radiation beams of the mid-band elements 130.

Hereinafter, in the following description, the first frequency band will be defined as a low band, which radiates a frequency defined to have an operating frequency between 600 MHz and 800 MHz and forms a low beam of a low frequency band (beamforming), and the second frequency band will be defined as a mid band, which radiates a frequency defined to have an operating frequency between 1.7 GHz and 2.4 GHz and forms a mid-beam pattern of a mid-frequency band (beamforming) .

In addition, the low-band transmission line 200 provided to feed the low-band elements 120 may be defined as a first transmission line, and the mid-band transmission line 300 provided to feed the mid-band elements 130 may be defined as a second transmission line.

First, the low-band phase shifter 400A of the phase shifters 400A and 400B of the antenna apparatus 1 according to an embodiment of the present disclosure will be specifically described as follows. The mid-band phase shifter 400B, as will be described later, differs from the low-band phase shifter 400A only in a position of a driving motor 410, and since the remaining configuration and theoretical principle thereof are the same, detailed description thereof will be omitted to the extent of duplication, and differences will be mainly described later.

As referred to in FIGS. 8 to 12B, the low-band phase shifter 400A may include a driving motor 410 that is electrically driven to generate rotational force, a plurality of vertical moving bars 430C, 430L, and 430R that receive the rotational force generated from the driving motor 410 and move in the vertical direction (V-direction) on the front surface of the reflecting panel 110, and a plurality of moving clamps 440 that are coupled to a plurality of positions of the plurality of vertical moving bars 430C, 430L, and 430R to move in the vertical direction in conjunction with the vertical moving bars 430C, 430L, and 430R.

Here, the driving motor 410 of the low-band phase shifter 400A may be provided in a form of a gear box at a lower side of the rear surface of the reflecting panel 110. A rotating shaft of the driving motor 410 may be disposed in the forward and backward direction, and pass through the reflecting panel 110 to be exposed to the front side of the reflecting panel 110. A pinion gear having pinion gear teeth 411 formed on an outer circumferential surface thereof may be rotatably connected to the rotating shaft of the driving motor 410.

In addition, the plurality of vertical moving bars 430C, 430L, and 430R may include three bars, including a center moving bar 430C formed to extend in the vertical direction at a front center of the reflecting panel 110, a left moving bar 430L disposed to be spaced apart from and parallel to the center moving bar 430C at a front left side of the reflecting panel 110, and a right moving bar 430R disposed to be spaced apart from and parallel to the center moving bar 430C at a front right side of the reflecting panel 110.

The three vertical moving bars 430C, 430L, and 430R may be coupled to each other via a connection bar 425 that connects lower ends thereof in the horizontal direction. A rack gear 420 having rack gear teeth 421 that engage with the pinion gear teeth 411 of the above-described pinion gear may be formed to extend in the vertical direction and coupled to the connection bar 425.

When the driving motor 410 is electrically driven to generate rotational force, the pinion gear is rotated, and the rack gear 420 is moved in the vertical direction (V-direction) by the rack gear teeth 421 that engage with the pinion gear teeth 411. Here, the three vertical moving bars 430C, 430L, and 430R coupled by the connection bar 425 move in an interlocked manner in the V-direction, thereby moving the plurality of moving clamps 440 in an interlocked manner.

As referred to in FIGS. 8 to 12, the low-band phase shifter 400A may further include a dielectric panel 450 for phase adjustment (hereinafter referred to simply as "phase dielectric") movably disposed at the branch points S1, S2, and S3 of the first transmission line 200 disposed to be spaced apart from the front surface of the reflecting panel 110, and a dielectric panel 460 for impedance matching (hereinafter referred to simply as "impedance dielectric") fixed disposed parallel to one side of the phase dielectric 450.

The phase dielectric 450 functions to shift phase values of the low-band elements 120 by changing a dielectric constant at the branch points S1, S2, and S3 on the first transmission line 200 while moving in the V-direction by the above-described moving clamps 440.

As referred to in FIGS. 11a and 11b, each of the moving clamps 440 may include a clamp body 441 secured to the corresponding vertical moving bar 430C, 430L or 430R (hereinafter, collectively referred to by the reference numeral "430") via a bridge bar 443 extending perpendicularly from the vertical moving bar 430, a coupling dielectric 444 coupled to a rear surface of the clamp body 441 to mediate coupling of the phase dielectric 450 to the clamp body 441 with the transmission line 200 interposed therebetween, and an elastic element 445 provided in the clamp body 441 to elastically support the transmission line 200 toward the phase dielectric 450.

The plurality of vertical moving bars 430 may be guided to move upward and downward by a plurality of support roller portions 470 disposed at predetermined intervals in the V-direction. A specific configuration of the support roller units 470 will be described in more detail later.

The coupling dielectric 444 may be a component configured to move in conjunction with the clamp body 441 at a front side of the transmission line 200, may be formed of a dielectric material, and may be configured so as not to affect the dielectric constant other than a change in the dielectric constant of the phase dielectric 450 that moves between the transmission line 200 and the front surface of the reflecting panel 110.

The elastic element 445 may elastically bring the coupling dielectric 444 into close contact with the transmission line 200, and thereby allow the transmission line 200 and the phase dielectric 450 to move in contact with each other with a uniform close contact force.

Hereinafter, the mid-band phase shifter 400B of the phase shifters 400A and 400B of the antenna apparatus 1 according to an embodiment of the present disclosure will be described, focusing only on portions that differ in comparison with the above-described low-band phase shifter 400A. The remaining configurations not described may be regarded as being the same as those of the low-band phase shifter 400A.

As referred to in FIGS. 8 to 12B, the mid-band phase shifter 400B may shift phase values through changes in dielectric constant generated while moving the phase dielectrics 450 respectively disposed at the branch points S1, S2, and S3 of the second transmission line 300 disposed to be spaced apart from the rear surface of the reflecting panel 110.

Here, with regard to the plurality of vertical moving bars 430, unlike in the case of the low-band phase shifter 400A in which the center moving bar 430C is provided, the mid-band phase shifter 400B may be provided with only the left moving bar 430L and the right moving bar 430R.

Furthermore, in the case of the low-band phase shifter 400A, the bridge bar 443 extends in the left and right direction only from the center moving bar 430C, and two clamp bodies 441 are provided on each bridge bar 443, whereas in the left moving bar 430L and the right moving bar 430R, one clamp body 441 is provided on each bridge bar 443. In the case of the mid-band phase shifter 400B, the bridge bar 443 extend in the left and right direction from each of the moving bars 430L and 430R, and two clamp bodies 441 are provided on each bridge bar 443, which constitutes a difference.

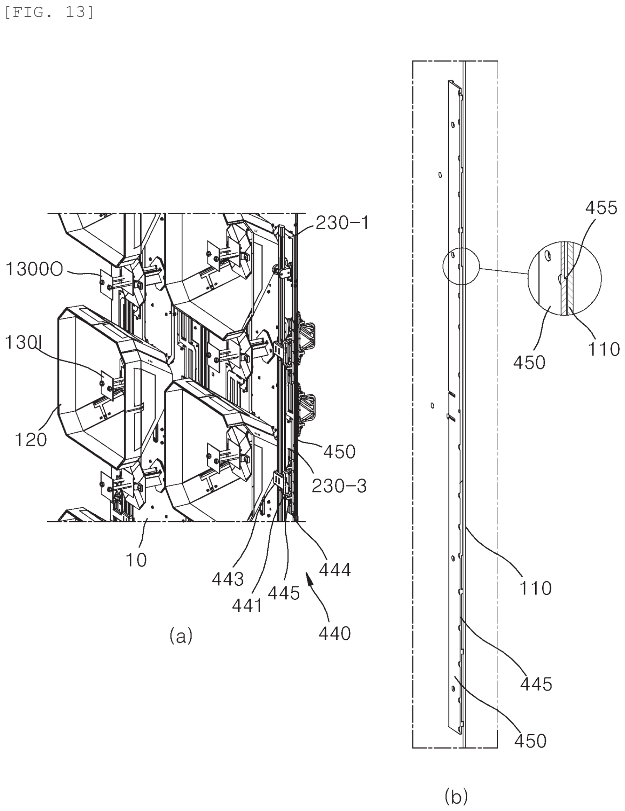

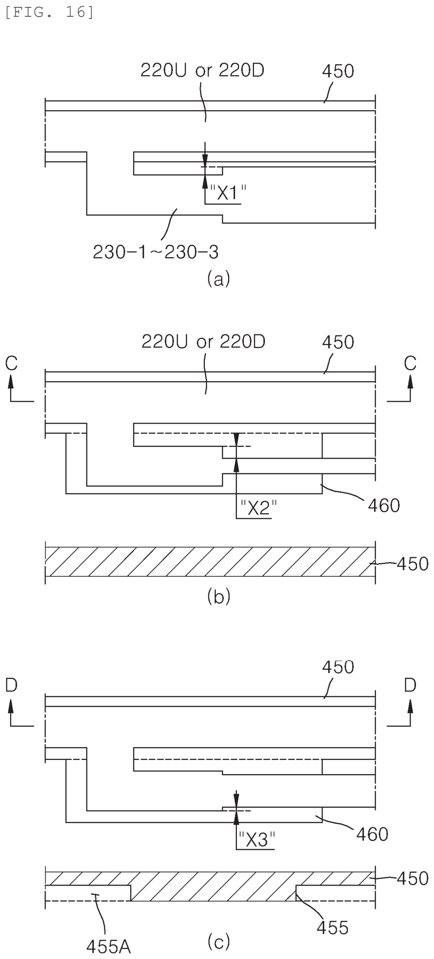

FIG. 13 is a cutaway perspective view illustrating a dielectric panel for phase adjustment among components of the phase shifter for antenna apparatuses according to an embodiment of the present disclosure, and an enlarged view of a portion thereof. FIG. 14 is a partially enlarged perspective view for explaining an operation of the phase shifter for antenna apparatuses according to an embodiment of the present disclosure. FIG. 15 is a sectional view taken along line B-B of FIG. 14. FIG. 16 is a schematic view for explaining a function of the dielectric panel for phase adjustment among the components of the phase shifter for antenna apparatuses according to an embodiment of the present disclosure.

The phase shifters 400A and 400B shift phase values through changes in dielectric constant of the phase dielectrics moving in the V-direction, whereby the plurality of vertical moving bars 430, which are provided to directly move the phase dielectrics, are required to reliably move in a vertical linear motion without being displaced.

To this end, as referred to in FIG. 14, the plurality of support roller units 470 may be provided to support upper and lower surfaces of the vertical moving bar 430 in a rolling manner.

Each of the plurality of support roller units 470 may include a pair of roller coupling brackets 471 that are respectively provided to protrude forward or rearward at left and right sides of the vertical moving bar 430, and a first roller 472 and a second roller 473 that are rotatably provided on the pair of roller coupling brackets 471. The first roller 472 may rotatably support one surface of the vertical moving bar 430, and the second roller 473 may rotatably support another surface of the vertical moving bar 430.

Due to the plurality of support roller units 470 as described above, the vertical moving bar 430 may reliably move upward and downward with minimized movement resistance, spaced apart by a predetermined distance from the front and rear surfaces of the reflecting panel 110.

As referred to in FIG. 15, the first transmission line 200 and the second transmission line 300 may be provided in an air strip line form to be spaced apart by a predetermined distance D1 from the front surface or the rear surface of the reflecting panel 110 by a plurality of spacing supports 500.

Each of the spacing supports 500 may include a panel hook portion 510 inserted into and fastened to a hook hole (reference numeral not shown) formed in the reflecting panel 110, and a line seating portion 520 provided opposite to the panel hook portion 510 and configured to allow the first transmission line 200 or the second transmission line 300 to be seated thereon.

The panel hook portion 510 may be formed with panel hook ends 515 each penetrating through and hooking to the hook hole. The line seating portion 520 may also be formed with line hook ends 525 on which opposite side edges of the first transmission line 200 or the second transmission line 300 seated thereon are hooked.

The phase shifters 400A and 400B of the antenna apparatus 1 according to an embodiment of the present disclosure may operate on a principle of shifting phase values at the branch points S1, S2, and S3 of the first transmission line 200 and the second transmission line 300 by a change in dielectric constant according to movement of the phase dielectric 450.

However, in order to more accurately implement shifting of phase values through a change in dielectric constant, impedance dielectrics 460 are required to be fixedly disposed on the input lines 310L and 310R corresponding to one side of the phase dielectric 450 or on some of the branch points S1, S2, and S3 of the transmission lines 320U and 320D before branching.

Here, it is preferable that each of the phase dielectrics 450 be disposed between one surface of the reflecting panel 110 and the transmission line 200 or 300 in an air strip line form spaced apart from the one surface of the reflecting panel 110, but it is not necessary to be installed on all of the transmission lines 200 and 300. The transmission lines 200 and 300 may be formed along the branch points S1, S2, and S3 where the plurality of branch lines 220U, 220D, 320U, and 320D branch out from the input lines 210L, 210R, 310L, and 310R to feed the plurality of radiating elements 120 and 130.

As referred to in (c) of FIG. 16, the phase dielectric 450 may be formed with an impedance matching step 455 stepped such that an air layer 455A is formed on a surface facing the reflecting panel 110.

In addition, the impedance dielectric 460 may be longitudinally disposed between the input lines 210L and 210R or 310L and 310R corresponding to the branch point S1 among the branch points S1, S2, and S3 and one surface of the reflecting panel 110, or between the upper transmission lines 220U and 320U and the lower transmission lines 220D and 320D corresponding to the branch points S2 and S3 among the branch points S1, S2, and S3 and one surface of the reflecting panel 110. Here, the impedance matching step 455 is preferably formed within a longitudinal range of the impedance dielectric 460.

The impedance matching step 455 formed in the phase dielectric 450 as described above may form a dielectric layer of a predetermined thickness such as the air layer 455A between one surface of the reflecting panel 110 and the phase dielectric 450, thereby minimizing a change in the width of the first transmission line 200 or the second transmission line 300 that needs to inevitably be changed for impedance matching.

For example, as referred to in (a) of FIG. 16, in the case where only the phase dielectric 450 is provided without the impedance dielectric 460, a variation in the width of the input lines 210L and 210R of the first transmission line 200, the input lines 210L and 210R corresponding to lines before branching of the branch points S1, S2, and S3, or of the upper transmission line 220U and the lower transmission line 220D, in order to implement an effective phase shift, is significantly large as "X1," and thus there is a risk of interference with a branch line on one side.

Furthermore, as referred to in (b) of FIG. 16, even in the case where the impedance dielectric 460 is provided together with the phase dielectric 450 but no impedance matching step 455 is formed in the phase dielectric 450, there is a problem in that a variation range in the width of the first transmission line 200 or the second transmission line 300 becomes "X2," which is larger than in the case of X1.

In this case, as referred to in (c) of FIG. 16, when the impedance matching step 455 is formed in the phase dielectric 450, the variation range in the width of the first transmission line 200 or the second transmission line 300 can be minimized to "X3", thereby not only allowing for the simplicity of the overall external shape of the transmission lines 200 and 300, but also providing the advantage of enabling an effective phase shift.

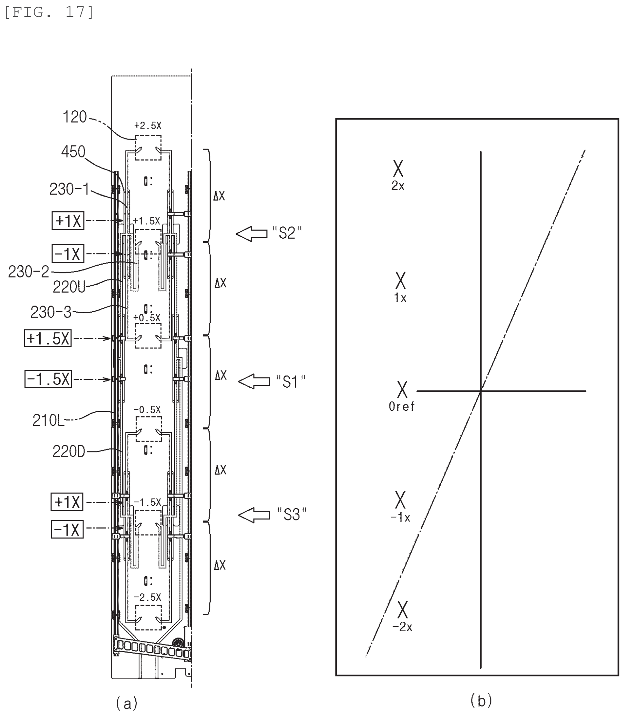

FIG. 17 illustrates a partial front view (a) of the first transmission line 200 for explaining phase difference implementation according to position and depth adjustment of the impedance matching step 455 of the phase dielectric 450 among the components of the phase shifters 400A and 400B of the antenna apparatus 1 according to an embodiment of the present disclosure, and a graph (b) illustrating an ideal phase difference.

In the antenna apparatus 1 according to an embodiment of the present disclosure, six low-band elements 120 may be arranged in the vertical direction (V-direction) so as to be spaced apart from each other to form a single RF chain, as described above. Here, each low-band element 120 may be disposed such that a spacing distance between adjacent low-band elements 120 is the same as ΔX. The reason is that, generally, in the operation of the phase shifter 400A, a side lobe formed during beamforming can be minimized when a phase difference (ΔX) between the low-band elements 120 is the same, and thus a decrease in gain can also be minimized.

That is, it is preferable that the low-band phase shifter 400A of the phase shifters 400A and 400B of the antenna apparatus 1 according to an embodiment of the present disclosure be driven such that a phase value shifted by the low-band phase shifter 400A has the same phase difference with respect to a reference phase, as referred to in (b) of FIG. 17.

However, the phase dielectrics 450, as described above, are provided to move in conjunction with the moving clamps 440 by the plurality of vertical moving bars 430, and are disposed respectively at the first to third branch points S1, S2, and S3. In order to implement the above-described same phase difference (ΔX), there is a problem in that moving distances of the phase dielectrics 450 disposed at the respective branch points S1, S2, and S3 are required to be different from each other.

As such, moving each of the phase dielectrics 450 disposed at the branch points S1, S2, and S3 by different moving distances leads to a problem in that, due to spatial constraints of the first transmission line 200 provided in an air strip line form, a separate driving mechanism for independently driving each phase dielectric 450 is required.

As referred to in FIG. 17, in the phase shifters 400A and 400B of the antenna apparatus 1 according to an embodiment of the present disclosure, when a target phase value of each low-band element 120 is set to a maximum value of +2.5X and a minimum value of -2.5X, the low-band elements 120 are required to have the same phase difference (ΔX). To this end, the phase dielectric 450 disposed at the first branch point S1 may be machined to form an impedance matching step 455 such that phase differences of +1.5X and -1.5X are provided with respect to the upper transmission line 220U and the lower transmission line 220D, respectively. The phase dielectrics 450 disposed at the second branch point S2 and the third branch point S3 may be machined to form impedance matching steps 455 such that, except for the middle branch transmission line 230-2 among the three branch transmission lines 230-1 to 230-3, a phase difference of +1X is provided with respect to the upper branch transmission line 230-1 and a phase difference of -1X is provided with respect to the lower branch transmission line 230-3.

As described above, the phase shifters 400A and 400B of the antenna apparatus 1 according to an embodiment of the present disclosure provide an advantage in that the impedance matching steps 455 formed to be different in the phase dielectric 450 vary an effective dielectric constant, so that, even when the phase dielectrics 450 are physically moved by the same distance, the phase dielectrics 450 may be varied to different electrical phases.

The phase shifters 400A and 400B of the antenna apparatus 1 according to an embodiment of the present disclosure have been described in detail with reference to the accompanying drawings. However, the embodiment of the present disclosure is not necessarily limited to the above-described embodiment, and it will be apparent that various modifications and equivalent implementations can be made by those skilled in the art. Therefore, the true scope of rights of the present disclosure shall be defined by the claims to be described below.

### [Industrial Applicability]

The present disclosure provides a phase shifter of an antenna apparatus, in which transmission lines provided in an air strip line form are disposed to be spaced apart from front and rear surfaces of a reflecting panel, and a phase value shift through a change in dielectric constant at a branch point is enabled.

## Claims

1. A phase shifter for antenna apparatuses, comprising:
a dielectric panel for phase adjustment (hereinafter referred to as "phase dielectric") movably disposed at a branch point of a transmission line disposed to be spaced apart from one surface of a reflecting panel;
a dielectric panel for impedance matching (hereinafter referred to as "impedance dielectric") fixedly disposed parallel to one side of the phase dielectric; and
a moving clamp configured to move the phase dielectric,
wherein the phase dielectric has an impedance matching step stepped such that an air layer is formed on a surface facing the reflecting panel.

2. The phase shifter of claim 1, wherein the phase dielectric is disposed between one surface of the reflecting panel and the transmission line in an air strip line form disposed to be spaced apart from the one surface of the reflecting panel.

3. The phase shifter of claim 1, wherein, in a case where the transmission line has the branch point at which the transmission line is branched into a plurality of branch lines to feed a plurality of radiating elements from an input line, the phase dielectric is formed to extend along the branch lines.

4. The phase shifter of claim 3, being configured to shift respective phase values of the radiating elements according to a variation in dielectric constant depending on a change in position of the phase dielectric.

5. The phase shifter of claim 3,
wherein the impedance dielectric is disposed to extend in a longitudinal direction between the input line and one surface of the reflecting panel at the branch points, and
wherein the impedance matching step is formed within a longitudinal range of the impedance dielectric.

6. The phase shifter of claim 3, further comprising:
a driving motor configured to be electrically driven and generate a rotational force; and
a plurality of vertical moving bars configured to receive the rotational force generated from the driving motor and move in an up and down direction on one surface of the reflecting panel,
wherein the moving clamp is coupled to each of a plurality of positions of the plurality of vertical moving bars and configured to move the phase dielectric in the up and down direction.

7. The phase shifter of claim 6,
wherein a pinion gear is axially rotatably connected to a rotating shaft of the driving motor, and
wherein the plurality of vertical moving bars move in a vertical direction by an operation in which rack gear teeth of a rack gear provided in a connection bar connecting the plurality of vertical moving bars engage with pinion gear teeth of the pinion gear.

8. The phase shifter of claim 6, wherein the moving clamp comprises:
a clamp body secured to the vertical moving bar via a bridge bar extending perpendicularly from the vertical moving bar;
a coupling dielectric coupled to a rear surface of the clamp body and configured to mediate coupling of the phase dielectric to the clamp body with the transmission line interposed therebetween; and
an elastic element provided in the clamp body and configured to elastically support the transmission line toward the phase dielectric.

9. The phase shifter of claim 6, wherein the transmission line comprises:
a first transmission line disposed on a front surface of the reflecting panel and configured to feed a first radiating element associated with a radiating beam in a first frequency band; and
a second transmission line disposed on a rear surface of the reflecting panel and configured to feed a second radiating element associated with a radiating beam in a second frequency band,
the phase shifter being provided with the driving motor, the plurality of vertical moving bars, and the moving clamp separately so as to be associated respectively with the first transmission line and the second transmission line.

10. The phase shifter of claim 6, wherein, in a case where a plurality of radiating elements are arranged to be spaced apart in the up and down direction at an end of each of the branch lines, and each of the radiating elements is disposed such that a spacing distance between adjacent radiating elements is the same,
the impedance matching step of the phase dielectric is formed to implement an identical phase difference between phase values formed by the plurality of radiating elements.

11. The phase shifter of claim 10, wherein, in a case where the branch point is defined such that an upper end of the input line is referred to as a first branch point, and respective ends of an upper transmission line and a lower transmission line branched from the first branch point, each being further branched into three branch transmission lines, are respectively referred to as a second branch point and a third branch point,
the phase dielectric is positioned to vary a dielectric constant at each of the branch points.

12. The phase shifter of claim 11, wherein the phase dielectric is disposed corresponding to the first branch point, the second branch point, and the third branch point.

13. The phase shifter of claim 11, wherein, in a case where target phase values of the radiating elements are set to a maximum value of +2.5X and a minimum value of -2.5X,
the impedance matching step of the phase dielectric disposed at the first branch point is machined to provide phase differences of +1.5X and -1.5X with respect to the upper transmission line and the lower transmission line, respectively, so that respective phase differences between the radiating elements are identical.

14. The phase shifter of claim 11, wherein, in a case where target phase values of the radiating elements are set to a maximum value of +2.5X and a minimum value of -2.5X,
the impedance matching step of the phase dielectric disposed at each of the second branch point and the third branch point is machined such that, except for a middle branch transmission line among the three branch transmission lines, a phase difference of +1X is provided with respect to an upper branch transmission line and a phase difference of -1X is provided with respect to a lower branch transmission line, so that respective phase differences between the radiating elements are identical.
